(19) Europäisches Patentamt
European Patent Office
Office européen des brevets

(11) EP 2 797 727 B1

(12) **EUROPEAN PATENT SPECIFICATION**

(45) Date of publication and mention
of the grant of the patent:
**12.09.2018   Bulletin 2018/37**

(21) Application number: **11751679.9**

(22) Date of filing: **12.07.2011**

(51) Int Cl.:
*B29C 47/24* *(2006.01)*          *B29C 47/06* *(2006.01)*
*B29C 47/26* *(2006.01)*          *B29C 47/10* *(2006.01)*
*A22C 13/00* *(2006.01)*          *B29L 23/00* *(2006.01)*
*B29C 47/12* *(2006.01)*          *B29C 47/36* *(2006.01)*
*B29C 47/08* *(2006.01)*          *B29C 47/76* *(2006.01)*

(86) International application number:
**PCT/PL2011/000075**

(87) International publication number:
**WO 2013/009196 (17.01.2013 Gazette 2013/03)**

(54) **AN EXTRUSION DEVICE AND A METHOD FOR MANUFACTURING A CYLINDRICAL COLLAGEN CASING**

EXTRUSIONSVORRICHTUNG UND VERFAHREN ZUR HERSTELLUNG EINER ZYLINDERFÖRMIGEN KOLLAGENHÜLLE

DISPOSITIF D'EXTRUSION ET PROCÉDÉ DE FABRICATION D'UNE ENVELOPPE CYLINDRIQUE EN COLLAGÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.11.2014   Bulletin 2014/45**

(73) Proprietor: **FABIOS Spólka Akcyjna**
**32-220 Maków Podhalanski (PL)**

(72) Inventor: **KRZYSZTOF, Janus**
**41-945 Piekary Slaskie (PL)**

(74) Representative: **Lukaszyk, Szymon**
**Kancelaria Patentowa Lukaszyk**
**Ul. Glowackiego 8/**
**40-052 Katowice (PL)**

(56) References cited:
**EP-A1- 0 493 788       WO-A1-90/15706**
**WO-A1-92/12840        DE-C- 659 706**
**GB-A- 1 166 398        SU-A3- 542 457**
**US-A- 3 221 372        US-A- 3 853 661**
**US-A- 4 420 451**

## Description

The invention relates to cylindrical collagen casings for foodstuff, such as sausages or fish products, that are edible so that it is unnecessary to remove the casing before the foodstuff is eaten and at the same time have increased resistance to tearing without the need of using additional nets. The invention also relates to methods and devices for manufacturing such collagen casings, including special heads for such devices.

## BACKGROUND OF THE INVENTION

Publication of patent application US 2008/0217820 discloses a tubular tissue scaffold which comprises a tube having a wall, wherein the wall includes biopolymer fibrils that are aligned in a helical pattern around the longitudinal axis of the tube where the pitch of the helical pattern changes with the radial position in the tube wall. The scaffold is capable of directing the morphological pattern of attached and growing cells to form a helical pattern around the tube walls. Additionally, an apparatus for producing such a tubular tissue scaffold is disclosed, the apparatus comprising a biopolymer gel dispersion feed pump that is operably connected to a tube-forming device having an exit port, where the tube-forming device is capable of producing a tube from the gel dispersion while providing an angular shear force across the wall of the tube, and a liquid bath located to receive the tubular tissue scaffold from the tube-forming device. A method for producing the tubular tissue scaffolds is also disclosed. Also, artificial tissue comprising living cells attached to a tubular tissue scaffold as described herein is disclosed. Methods for using the artificial tissue are also disclosed.

Other exemplary biopolymer casings with a number of layers of substantially parallel aligned fibrils are disclosed in the patent publications WO 98/21973 and CN 200962804.

Patent publication WO90/15706 discloses a multiaxially oriented liquid crystal polymer film, a circuit board comprising such a film and an electronic circuit element, and a method of extruding such a film from liquid crystalline polymer using a rotational die. The die comprises: frame means; inner, middle and outer rotors on said frame means which are concentric and have facing surfaces which define inner and outer annular polymer flow channels; means for providing a flow of polymer to each of said annular channels; and means for rotating the inner and outer rotors in a given direction and rotating the middle rotor in the opposite direction for shearing said polymer flows in said channels.

Patent publication US 4,420,451 discloses a method of extruding a laminated polymer sheet of improved properties comprising the steps of extruding in an extrusion die a dispersion of two molten polymer materials in at least two generally concentric tubular streams rotating relative to one another, subjecting the respective tubular streams during such extrusion to significant attenuation generally in the direction of extrusion flow to attenuate and elongate the dispersed polymer material, combining the separate attenuated tubular streams into a common stream while continuing the extrusion thereof, discharging the common stream while the polymers therein remain in molten condition from said die through an exit passage defined by two generally concentric spaced apart cylindrical walls while rotating such walls in generally opposite relative directions whereby the opposite surfaces of the common extruded stream contiguous to such walls are subjected while passing through said exit passage to the smearing action of said rotating walls to thereby peripherally shear out the attenuated polymer dispersion through the thickness of the common stream, allowing the common extruded stream to solidify after emergence from such exit passage, and finally collecting the thus solidified tubular sheet.

Patent publication WO 92/112840 discloses an extrusion apparatus for extruding material along an extrusion direction comprising: an orientation control section having an outer member having an axis extending in the direction of extrusion, and having a first surface defining a space; an inner member, positioned within the space co-axially with the outer member and having a second surface which is spaced apart from the surface of the outer member, wherein at least one of the first and second members comprises a channel formation, and the inner and outer members are dimensioned such that the first and second surfaces are radially spaced apart from one another.

Patent publication SU542457 discloses an apparatus for forming a protein shell of collagen mass, comprising a housing with a calibration slit formed by the core and the nozzle cap, the channels for supplying the mass, cooling system and a system of pressure equalization. In order to increase the service life the apparatus is provided with inner and outer sleeves located after the calibration slit, having necks provided with helical threads, and interconnected to form a forming gap. The sleeves are rotatable in opposite directions, and the core is mounted in the bore of the inner sleeve.

It has been an object of the present invention to provide a cylindrical collagen casing having improved strength and gas permeability parameters. Additionally it has been an object of the invention to provide a method of producing such an improved casing as well as devices for realizing such a method.

## SUMMARY OF THE INVENTION

According to the invention an extruding head for an extruder apparatus for producing cylindrical collagen casings according to claim 1 is provided.

An extruding head according to the present invention enables for producing casings of very diverse thicknesses of a casing wall. It further enables for producing casings having high mechanical strength and at the same time relatively small wall thickness. It also enables to predefine the gas permeability of the extruded casing within a wide range of values.

The invention also provides an extruder apparatus for producing cylindrical collagen casings, comprising an extruding head, at least one engine, and at least one pump for delivering collagen gel mixture to the extruding head, wherein the extruding head has a construction as defined above, said at least one engine drives the sleeve members of the extruding head and said at least one pump delivers collagen gel mixture to said at least one annular gap.

Further the invention provides a cylindrical collagen casing formed by axial extrusion of collagen gel mixture through at least one annular gap of an extruding head for an extruder apparatus, where at least one circumferential surface defining the gap rotates during the extrusion process, having a form of a matrix of biopolymer fibrils submerged in a filler, comprising at least one laminated gap layer extruded from said at least one annular gap, wherein , at least one of said gap layers comprises at least two sublayers of fibrils aligned helically around the longitudinal axis of the casing and substantially in parallel to each other, and directions of fibrils alignments of said at least two sublayers of said at least one gap layer are different and

it comprises at least two gap layers each comprising two sublayers, wherein

in the internal gap layer fibrils alignment of the internal sublayer is angled in relation to fibrils alignment of the external sublayer at an angle in a range of 27.5 to 45°, and in the external gap layer fibrils alignment of the internal sublayer is angled in relation to fibrils alignment of the external sublayer at an angle in a range of 27.5 to 45°, whereas fibrils alignment of the internal sublayer of the internal gap layer is angled in relation to fibrils alignment of the external sublayer of the external layer at an angle in a range of 80° to 100°.

The term "gap layer" as used herein refers to a layer extruded through an annular gap of an extrusion head, while the term "sublayer" refers to a layer of fibrils disposed over substantially the same radius from the longitudinal axis of the casing and usually in the same winding direction.

Spiral direction of fibrils alignment in casings according to the present invention, and especially differentiation of spiral directions of fibrils alignments in separate layers/sublayers, reduce mechanical stresses on a surface of a casing during its drying, and thus ensure elimination of defects and/or disturbances which might have resulted in forming roughness on internal/external surface of a casing.

Moreover, opposite directions of spiral fibrils alignments in particular sublayers of the casing according to the present invention form a pseudo-intersecting spatial structure which features substantially the same tear strength in axial and radial directions. Preferably at least one of said gap layers comprises additional sublayer of fibrils of substantially undetermined cross-alignment, located between said two sublayers of this gap layer and both circumferential surfaces defining the extrusion gap for this gap layer rotate in the opposite directions during the extrusion process.

Finally the invention provides a method of producing a cylindrical collagen casing comprising the steps of

(a) delivering collagen gel mixture to an axially internal side of a housing member for a head of an extruder apparatus as defined in claim 1,

(b) extruding collagen gel mixture axially through at least one annular gap connecting axially internal side with axially external side of said housing member, where at least one circumferential surface defining the gap rotates during the extrusion process, to form at least one gap layer, wherein the method further comprises the step (c) of drying said at least one gap layer at the axially external side of said housing member to form at least two sublayers of fibrils aligned helically around the longitudinal axis of the casing and substantially in parallel to each other, wherein pitch directions of fibrils alignments of said at least two sublayers of said at least one gap layer are different.

Said step (b) preferably involves extruding collagen gel mixture through at least two annular gaps and at least one of these gaps is located between two sleeve members provided with annular projections tapered in an axial direction and extending outside the external side of the housing member and the outlets of said annular gaps between each pair of neighbouring sleeve members are located at the ends of corresponding annular projections.

BRIEF DESCRIPTION OF THE DRAWINGS

The other features of the invention shall be presented below in exemplary embodiments and in connection with the attached drawings on which:

Fig. 1 schematically illustrates a device for manufacturing cylindrical collagen casings according to the invention;
Fig. 2 schematically illustrates a head that may be applied in the device shown in

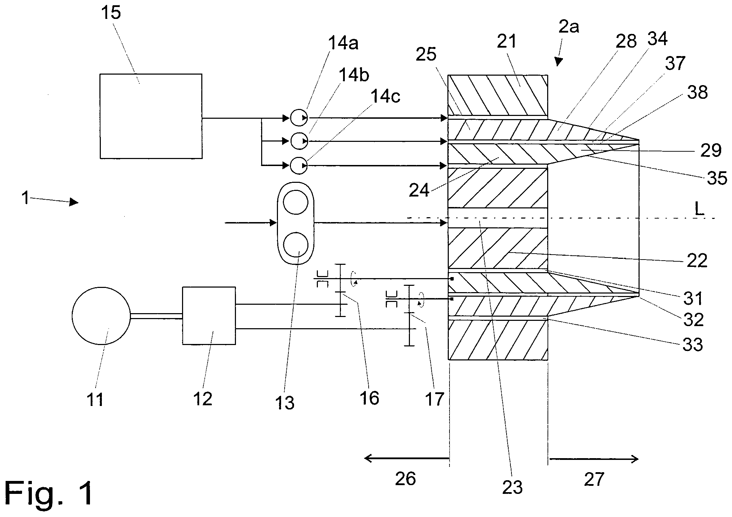

Fig. 1 in cross-section during the process of manufacturing three-layered collagen casing shown here in partial cross-section;

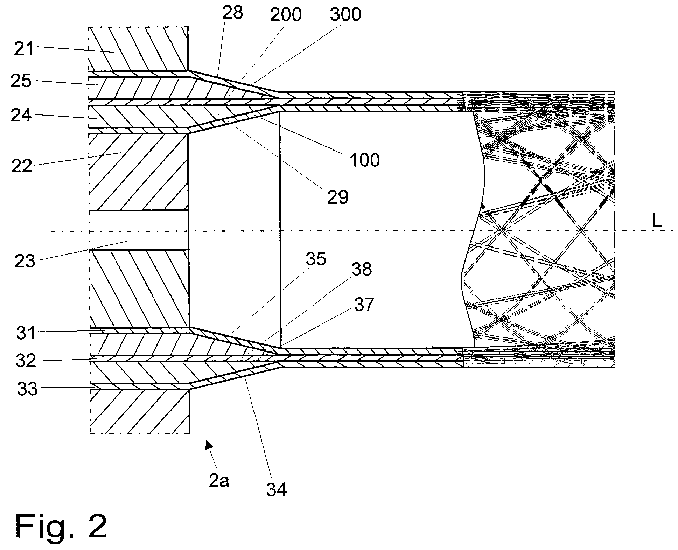

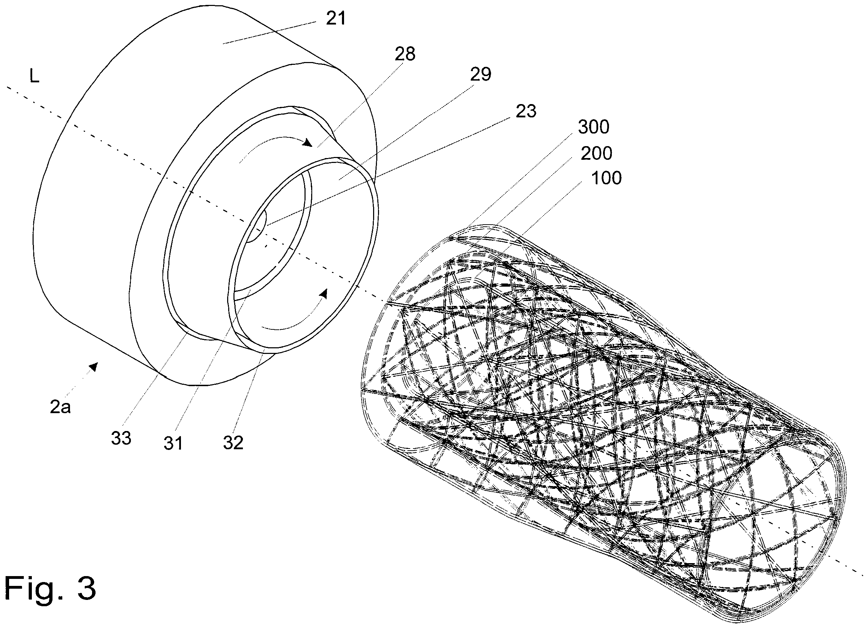

Fig. 3 illustrates the head and three-layered collagen casing of Fig. 2 in a perspective view, wherein the casing is shown separated from the head to increase the clarity of the drawing;

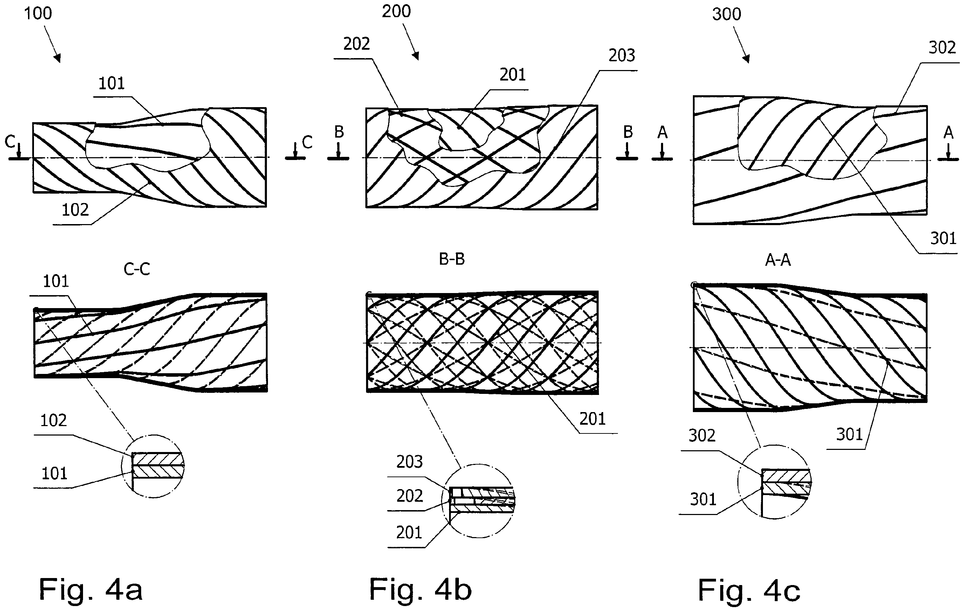

Fig. 4 illustrates particular layers of the three-layered casing in a side view;

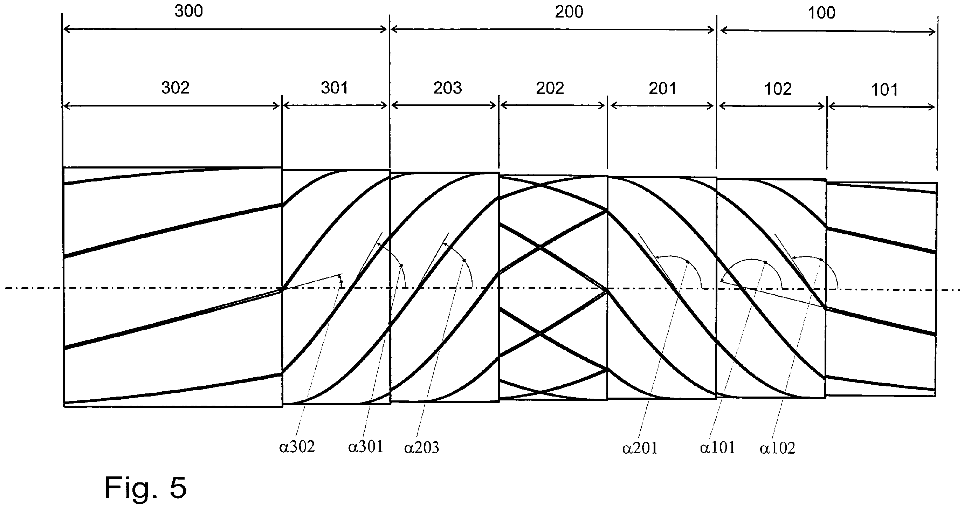

Fig. 5 shows an exploded schematic side view of a formed dried-up three-layered casing according to the present invention;

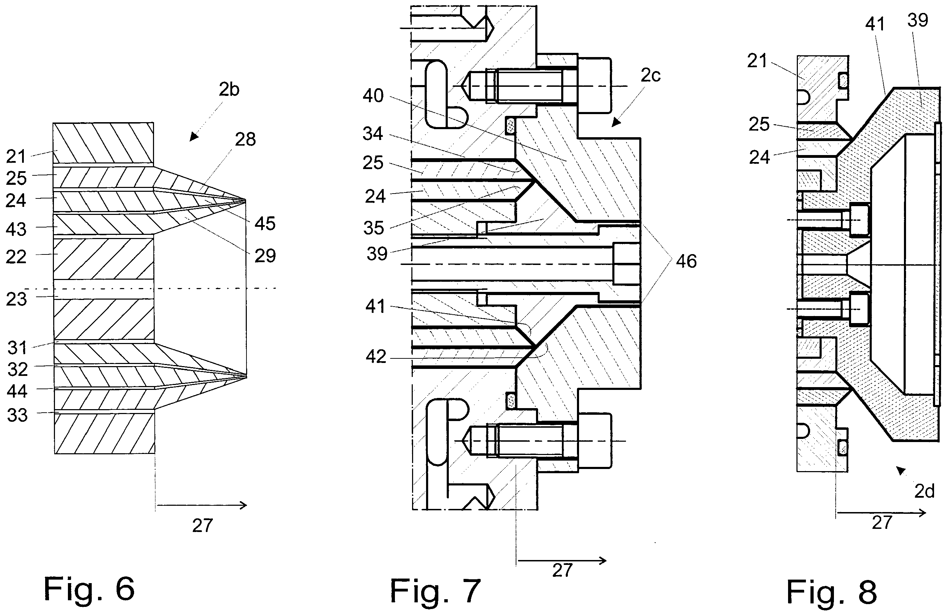

Fig. 6 illustrates an embodiment of the head which is not a part of the invention for manufacturing four-layered collagen casing;

Fig. 7 illustrates an embodiment of the head according to the invention with an internal and external cylindrical adapter, and

Fig. 8 illustrates another embodiment of the head which is not a part of the invention with an internal cylindrical adapter only.

## DETAILED DESCRIPTION OF THE PREFERRED EMBODIMENTS

Reference is now made to Fig. 1 which functionally illustrates an exemplary device 1 for manufacturing cylindrical collagen casings according to the invention and to Figs. 2 and 3 showing detailed views of the head of the extruder apparatus of Fig. 1. The device 1 comprises an engine 11, motoreducer 12, blowing engine 13, pumps 14a-c coupled with the tank 15 containing collagen gel mixture. These elements of the device are known from the state of art, e.g. as disclosed in the specification US 4,138,503 which is incorporated within the scope of disclosure of this specification by reference.

As shown in Fig. 1, the device 1 further comprises a head 2a having a housing member 21 having a cylindrical opening defining the longitudinal axis L of the head. Inside the cylindrical opening of the housing member 21 a cylindrical element 22 is disposed having a channel 23. Between the peripheral surface of the cylindrical opening of the housing member 21 and peripheral surface of the cylindrical element 22, two sleeve members 24 and 25 are disposed defining annular gaps 31, 32 and 33 correspondingly between radially external peripheral surface of the cylindrical element 22 and radially internal peripheral surface of the sleeve member 24, between radially external peripheral surface of the sleeve member 24 and radially internal peripheral surface of the sleeve member 25, and between radially external peripheral surface of the sleeve member 25 and radially internal peripheral surface of the cylindrical opening of the housing member 21. All these surfaces, i.e. the internal surface of the cylindrical opening in the housing member 21, the external 34 and internal 37 surfaces of the sleeve member 25, the external 38 and internal 35 surfaces of the sleeve member 24 and the cylindrical element 22 external surface, defining annular gaps 31, 32 and 33, are polished.

The sleeve members 24, 25 are provided with annular projections 28, 29 which are tapered in an axial direction L. The external surface 34 of the sleeve member 25 converges to the longitudinal axis L wherein the internal surface 35 of the sleeve member 24 diverges out from the axis L. The sleeve members 24, 25 extend outside of the external side of the housing member 21. The outlet of annular gap 32 between the pair of neighbouring sleeve members 24, 25 is located at the ends of the annular projections 28, 29. Circumferential surfaces 37, 38 of said annular projections 28, 29 that face each other and define the annular gap 32 are circumferentially parallel to each other.

Sleeve members 24 and 25 may rotate around the axis L driven by the engine 11, through the motoreducer 12 and parallel gear boxes 16 and 17, so that directions of their rotations are opposite. Technical details of transmission of rotations between the engine (or engines) 11 to sleeve members 24 and 25 are disclosed in various prior art documents such as WO 98/21973, PL 287902, GB 988875.

The annular gaps 31, 32 and 33 join axially internal 26 and external 27 sides of the housing 21. At the axially internal side 26 of the housing member 21 a collagen gel mixture is fed from a tank 15 by means of pumps 14a-14c to the annular gaps 31-33, wherein for each gap 31-33 a separate pump 14a-14c is connected what enables for individual regulation of a gel mixture pressure delivered to particular gap. Therefore different gel mixture pressure may be set depending on gap dimensions and a required structure of a casing to be produced. The blowing engine 13 feeds air under a pressure to the channel 23 of the cylindrical element 22.

Description of an operation of the extruding heads of the invention shall be provided with reference to the manufacturing of three-, two- , and one-layered casings.

Example 1

Three-layered casing

The head 2a of a construction depicted in Figs. 1-3 with gaps 31, 32 and 33 having radial width of about 340 $\mu$m, was used for extruding a three-layered collagen casing having collagen fibrils of differentiated orientations in relation to the longitudinal axis L in three individual formation regions corresponding to particular gaps.

Collagen gel mixture had the following composition:

- collagen, comprising fibrils of a length of from 2.0 to 7.5 mm, in an amount of 10.8 % by wt.,

- glycerine in an amount up to 2.6 % by wt.,

- water in an amount of from 89 to 93 % by wt.,

- oxidized starch in an amount up to 50% by wt. in relation to the weight of collagen,

- glyoxal in an amount to 0.01% by wt. in relation to the total weight of collagen and glycerine.

Collagen gel mixture was delivered into the gaps 31, 32 and 33 at the formation pressures maintained within the ranges:

| gap 31 | 3.024 - 9.936 [MPa] |
| gap 32 | 3.36 - 11.04 [MPa] |
| gap 33 | 3.5 - 11.5 [MPa] |

Pressure value of air delivered to the channel 23 was maintained in a range from 15 to 100 Pa. Sleeve members 24 and 25 rotated in opposite directions with the same angular velocity of the value dependent of the linear velocity of a collagen gel mixture flowing through gaps, according to the following empirical formula:

$$Ut/Us = A \cdot S^2 - B \cdot S + C$$

where:

Ut - angular velocity of a sleeve member expressed in degrees per second;
Us - linear velocity of a collage gel mixture in gaps 31, 32 and 33;
S - radial gap width;
A, B, C - parameters having the following values: A = 4; B = 0.9; C = 1.

By putting into this equation the radial width of 340 $\mu$m, the ratio of these velocities amounts 1.1564.

Three-dimensional cylindrical collagen matrix produced in this manner is depicted in Figs. 2-5.

Collagen fibrils have lengths of 2.0-7.5 mm and diameter of about 150 nm and are submerged in a water solution of plasticizer which in this embodiment is a water solution of glycerine and oxidized starch. Another suitable plasticizer includes glycerine or other plasticizers known from the prior art.

After drying, the casing ready for use contained:

- collagen, comprising fibrils of a length of from 2.0 to 7.5 mm, in an amount up to 83 % by wt.,

- glycerine in an amount up to 20 % by wt.,

- water in an amount up to 15 % by wt.,

- oxidized starch in an amount up to 50% by wt. in relation to the weight of collagen,

- glyoxal in an amount to 0.01% by wt. in relation to the total weight of collagen and glycerine.

The matrix of such a casing comprised three main layers 100, 200 and 300 corresponding to the gaps 31, 32 and 33, which as a whole was divided into seven sublayers:

- one internal sublayer 101 and one external sublayer 302, having respectively a right- and left-handed fibrils orientation at the angle in a range from 5 to 12,5°;

- four intermediate sublayers, consisting of two sublayers (102 and 201) of right-handed fibrils orientation and two sublayers (203 and 301) of left-handed fibrils orientation at the angle in a range from 40 to 50°; and

- one intermediate sublayer in which collagen fibrils were oriented randomly without any dominating direction.

The diameter and the thickness of the matrix at a point of contact of particular layers directly after extrusion (before drying) obviously depend on the size of the extruding head, wherein diameters of from about 10 to about 30 mm and thicknesses of from about 200 $\mu$m to about 600 $\mu$m are considered as preferable.

Further details of layers 100, 200 and 300 of the casing are described below.

Layer 100

The first internal cylindrical layer 100 of the casing was formed in a result of a flow of a collagen gel mixture through the annular gap 31 between the circumferential external surface of the cylindrical element 22 and the circumferential internal surface of the sleeve member 24 and corresponding collagen gelation. After leaving the gap 31 the layer 100 radially expanded due to the pressure of air delivered through the channel 23 and due to collagen viscosity causing this layer to adhere to the internal surface 35 of the annular projection 29 of the sleeve member 24.

Since the sleeve member 24 rotated in relation to the static cylindrical element 22 and the collagen gel was delivered from the internal side 26 of the housing member 21 of the head under a pressure directed parallelly to the longitudinal axis L, the layer 100 after leaving the head consisted of two sublayers of right-handed fibrils orientation:

- sublayer 101 of fibrils oriented at an angle in a range of 5 to 12,5° and

- sublayer 102 of fibrils oriented at an angle in a range of 40 to 50°.

Layer 200

The second intermediate cylindrical layer 200 of the casing was formed in a result of a flow of a collagen gel mixture through the annular gap 32 between the circumferential external surface of the sleeve member 24 and the circumferential internal surface of the sleeve member 25 and corresponding collagen gelation.

Since the sleeve members 24 and 25 rotated in opposite directions and the collagen gel was delivered from the axially internal side 26 of the housing member 21 of the head under a pressure directed parallelly to the longitudinal axis L, the layer 200 after leaving the head consisted of three sublayers:

- sublayer 201 of right-handed fibrils oriented at an angle in a range of 40 to 50°,

- sublayer 202 of chaotical fibrils orientation (due to opposite rotations of sleeve members 24 and 25, internal energy of gel particles neighbouring these members were eliminated in the central region of this layer) and

- sublayer 203 of left-handed fibrils oriented at an angle in a range of 40 to 50°.

Layer 300

The third external cylindrical layer 300 of the casing was formed in a result of a flow of a collagen gel mixture through the annular gap 33 between the circumferential external surface of the sleeve member 25 and surface of the cylindrical opening in the housing member 21. After leaving the gap 33 the layer 300 undergoes a radial contraction due to helical arrangement of collagen fibrils and collagen viscosity which caused the layer to adhere to the external surface 34 of the annular projection 28 of the sleeve member 25.

Since the sleeve member 25 rotated in relation to the housing member 21 and the collagen gel was delivered from the axially internal side 26 of the housing member 21 of the head under a pressure directed parallelly to the longitudinal axis L, the layer 300 after leaving the head consisted of two sublayers of left-handed fibrils orientation:

- sublayer 301 of fibrils oriented at an angle in a range of 40 to 50° and

- sublayer 302 of fibrils oriented at an angle in a range of 5 to 12,5°.

Fig. 4 illustrates particular gap layers 100, 200, 300 of a three-layered casing according to Example 1. The internal gap layer 100 shown in Fig. 4a consists of two sublayers 101, 102 of parallelly aligned fibrils. The intermediate gap layer 200 shown in Fig. 4b consists of two sublayers 201, 203 of parallelly aligned fibrils with a sublayer 202 of chaotically cross-aligned fibrils sandwiched in between. The external gap layer 300 shown in Fig. 4c consists of two sublayers 301, 302 of parallelly aligned fibrils, similarly as layer 100.

Fig. 5 illustrates relationships between directions of fibrils alignments of particular gap layers. Tangent lines crossing the longitudinal axis L of the casing illustrate the angles at which the fibrils are aligned in relation to the longitudinal axis L as listed in the Table below:

| Sublayer | winding angle | value |
|----------|---------------|-------|
| 101 | $\alpha 101$ | 167.5 to 175° |
| 102, 201 | $\alpha 102, \alpha 201$ | 130 to 140° |
| 203, 301 | $\alpha 203, \alpha 301$ | 40 to 50° |
| 302 | $\alpha 302$ | 5 to 12.5° |

Example 2

Two-layered casing

The head 2a of a construction depicted in Figs. 1-3, in which radial widths of the gaps 31, 32 amounted 500 $\mu$m, was used for extrusion of a two-layered collagen casing through the gaps 31 and 32, wherein the gap 33 was blocked.

The composition of a collagen gel mass has been the same as in the Example 1, wherein the pressures were set as follows:

formation pressure [MPa]

| | |
|--------|------------|
| gap 31 | 2.88 - 9.6 |
| gap 32 | 3 - 10 |

Similarly as in the Example 1, pressure of air delivered to channel 23 was maintained in a range from 15 to 100 Pa and the sleeve members 24 and 25 rotated in the opposite directions with the same angular velocity.

Three-dimensional cylindrical matrix of collagen fibrils having length of 2.0-7.5 mm and submerged in a water solution of plasticizer has been formed. The matrix comprised two main layers corresponding to gaps 31 and 32 separated into five sublayers of structures analogical to layers 100 and 200 of three-layered casing described in Example I.

Example 3

One-layered casing

The head 2a of a construction depicted in Figs. 1-3, in which radial width of the gap 32 amounted about 625 $\mu$m, was used for extrusion of one-layered collagen casing. Gaps 31 and 33 were blocked.

The composition of a collagen gel mass remained the same as in the Example 1, wherein the gel mixture was delivered at the pressure of 6.0 MPa. Air was delivered to the channel 23 at the pressure of about 60 Pa.

Three-dimensional cylindrical matrix of collagen fibrils having length of 2.0-7.5 mm submerged in water solution of plasticizer has been formed. The matrix comprised one main layer 200 divided into three sublayers analogically as layer 200 of three-layered casing of Example 1.

Obviously the invention enables to form various casings in dependence of the gaps used for extrusion.

An embodiment of a head 2b which is not a part of the present invention is shown in Fig. 6. In this embodiment the head 2b comprises three rotatable sleeve members 24, 25, 43 wherein the internal and the external sleeve members 43, 25 rotate in the same direction and the intermediate sleeve member 24 rotates in the opposite direction. The head 2b comprises four annular gaps 31, 32, 44, 33, the two of which are defined between the counter-rotating members 24, 25, 43. The annular projection 45 of the intermediate sleeve member 24 is tapered symmetrically in relation to the central axis L of the longitudinal section with internal diameter and external diameter respectively increasing and decreasing along this axis. The head 2b enables for forming four-layered casing comprising two intermediate layers 200 described in Example I and corresponding to gaps 32 and 44.

An extruding head 2c shown in Fig. 7 comprises an internal adapter 39 and an external adapter 40. The internal adapter 39 is provided with an external annular surface 41 parallel to the internal annular surface 35 of the annular projection of the innermost sleeve member 24. The external adapter 40 is in turn provided with an internal annular surface 42 parallel to the external annular surface of the outermost sleeve member 25. Both adapters 39 and 40 form a gap 46 responsible for the final diameter of the extruded casing.

An extruding head 2d shown in Fig. 8 which is not a part of the invention comprises only an internal adapter 39 having an annular external forming surface 41 parallel to the internal surface 35 of the annular projection of the internal sleeve member 24. The forming surface 41 extends ends up with a cylindrical section of a constant diameter corresponding to a final diameter of the extruded casing.

**Claims**

1. An extruding head for an extruder apparatus for producing cylindrical collagen casings having an axially internal side for delivering collagen gel mixture for extrusion and an axially external side for receiving extruded layers of collagen fibrils comprising:

   - a housing member (21) provided with a cylindrical opening,
   - a cylindrical member (22) arranged concentrically inside the cylindrical opening of said housing member (21),
   - two sleeve members (24, 25) disposed concentrically inside an annular channel between the circumferential surface of the cylindrical opening of said housing member (21) and the circumferential surface of said cylindrical element (22), which are rotatable inside this channel, wherein the circumferential surface of a sleeve member (24, 25) and the circumferential surface of an element (21, 25, 24, 22) neighbouring this member (24, 25) define an annular gap (31, 32, 33) that connects the axially internal side with the axially external side of said housing member (21),

   wherein,
   said sleeve members (24, 25) are provided with annular projections (28, 29) tapered in an axial direction (L) and the outlet of an annular gap (32) between neighbouring sleeve members (24, 25) is located at the ends of the corresponding annular projections (28, 29),
   and wherein the directions of rotations of the neighbouring sleeve members (24, 25) are opposite to each other,
   wherein said head additionally comprises
   a radially external adapter (40) fixed to the housing member (21) provided with a radially internal annular surface (42) which substantially matches the radially external annular surface (34) of the annular projection (28) of the radially outermost sleeve member (25),
   a radially internal adapter (39) fixed to the cylindrical member (22) provided with a radially external annular surface (41) which substantially matches the radially internal annular surface (35) of the annular projection (29) of the radially innermost sleeve member (24)
   wherein both adapters (39, 40) form a gap (46) responsible for the final diameter of the extruded casing
   **characterized in that**
   a radial width of the annular gap (31, 32, 33) is within a range from 340 to 625 $\mu$m, and the surfaces defining the annular gaps (31, 32, 33) are polished.

2. An extruder apparatus for producing cylindrical collagen casings, comprising an extruding head, at least one engine, and at least one pump for delivering collagen gel mixture to the extruding head, **characterized in that** the extruding head (2) has a construction defined in claim 1, wherein said at least one engine (11) drives the sleeve members (24, 25) of the extruding head (2) and said at least one pump (14a, 14b, 14c) delivers collagen gel mixture to said at least one annular gap (31, 32, 33).

3. A cylindrical collagen casing formed by axial extrusion of collagen gel mixture through at least one annular gap of an extruding head for an extruder apparatus as defined in claim 1, where at least one circumferential surface defining the gap rotates during the extrusion process, having a form of a matrix of biopolymer fibrils submerged in a filler, comprising at least two gap laminated layers extruded from said at least one annular gap, **characterized in that**, each of the at least two gap layers (100, 200, 300) comprises at least two sublayers (301, 302; 201, 203; 101,102) of fibrils aligned helically around the longitudinal axis (L) of the casing and substantially in parallel to each other, and directions of fibrils alignments of said at least two sublayers of said at least one gap layer are different and wherein in the internal gap layer (100) fibrils alignment of the internal sublayer (101) is angled in relation to fibrils alignment of the external sublayer (102) at an angle in a range of 27.5 to 45°, and in the external gap layer (300) fibrils alignment of the internal sublayer (301) is angled in relation to fibrils alignment of the external sublayer (302) at an angle in a range of 27.5 to 45°, whereas fibrils alignment of the internal sublayer (101) of the internal gap layer (100) is angled in relation to fibrils alignment of the external sublayer (302) of the external layer (300) at an angle in a range of 80° to 100°.

4. The cylindrical collagen casing according to claim 3, **characterized in that** at least one of said gap layers (200) comprises additional sublayer (202) of fibrils of substantially random cross-alignment, located between said two sublayers (201, 203) of this gap layer (200) and both circumferential surfaces defining the extrusion gap for this gap layer rotate in the opposite directions during the extrusion process.

5. The cylindrical collagen casing according to claim 3 or 4, **characterized in that** in the external gap layer (300) fibrils alignment of the external sublayer (302) is angled in relation to the longitudinal axis L of the casing at an angle ($\alpha$302) in a range of 5 to 12.5° and fibrils alignment of the internal sublayer (301) is angled in relation to the longitudinal axis L of the casing at an angle ($\alpha$301) in a range of 40 to 50°, whereas in the internal gap layer (100) fibrils alignment of the internal sublayer (101) is angled in relation to the longitudinal axis L of the casing at an angle ($\alpha$101) in a range of 167.5 to 175° and fibrils alignment of the external sublayer (102) is angled in relation to the longitudinal axis L of the casing at an angle ($\alpha$102) in a range of 130 to 140°.

6. The cylindrical collagen casing according to claim 3 or 4, **characterized in that** it comprises at least three gap layers (100, 200, 300) wherein at least one intermediate gap layer (200) comprises additional sublayer (202) of fibrils of substantially random alignment sandwiched in between an internal sublayer (201) of fibrils aligned in relation to the longitudinal axis L of the casing at an angle ($\alpha$201) in a range of 130 to 140° and an external sublayer (203) of fibrils aligned in relation to the longitudinal axis L of the casing at an angle ($\alpha$203) of 40 to 50°.

7. A method of producing a cylindrical collagen casing comprising the steps of

(a) delivering collagen gel mixture to an axially internal side of a housing member of an extruding head for an extruder apparatus as defined in claim 1,
(b) extruding collagen gel mixture axially through at least one annular gap connecting the axially internal side with an axially external side of said housing member, where at least one circumferential surface defining the gap rotates during the extrusion process, to form at least one gap layer, **characterized in that** it further comprises the step (c) of drying said at least one gap layer (100, 200, 300) at the axially external side (27) of said housing member (21) to form at least two sublayers (301, 302; 201, 203; 101,102) of fibrils aligned helically around the longitudinal axis (L) of the casing and substantially in parallel to each other, wherein pitch directions of fibrils alignments of said at least two sublayers of said at least one gap layer are different.

8. The method of producing a cylindrical collagen casing according to claim 7, **characterized in that** said step (b) involves extruding collagen gel mixture through at least two annular gaps (31, 32, 33) and one of these gaps (32) is located between two sleeve members (24, 25) provided with annular projections (28, 29) tapered in an axial direction and extending outside the external side (27) of the housing member (21) and the outlets of said annular gaps between each pair of neighbouring sleeve members are located at the ends of corresponding annular projections (28, 29).

**Patentansprüche**

1. Extruderkopf für Extruder zur Herstellung von zylinderförmigen Kollagenhüllen, der eine axial innere Seite zur Zuführung eines Kollagengel-Gemisches zur Extrusion sowie eine axial äußere Seite zur Entnahme von extrudierten Kollagenfasern aufweist und folgende Elemente enthält:

- Gehäuseelement (21) mit einer zylinderförmigen Öffnung,
- zylinderförmiges Element (22) konzentrisch innerhalb der zylinderförmigen Öffnung des besagten Gehäuseelementes (21) angeordnet,

- zwei Hülsenelemente (24, 25) konzentrisch innerhalb eines ringförmigen Kanals zwischen einer peripheren Fläche der zylinderförmigen Öffnung des besagten Gehäuseelementes (21) und einer peripheren Fläche des besagten zylinderförmigen Elementes (22) angebracht, die sich innerhalb dieses Kanals drehen können, wobei die periphere Fläche des Hülsenelementes (24, 25) und die periphere Fläche des mit diesem Element (24, 25) benachbarten Elementes (21, 25, 24, 22) einen ringförmigen Schlitz (31, 32, 33) bestimmen, der die axial innere Seite mit der axial äußeren Seite des besagten Gehäuseelementes (21) verbindet,

wobei

die oben genannten Hülsenelemente (24, 25) ringförmige Vorsprünge (28, 29) aufweisen, die in axiale Richtung (L) verengen, der Austritt des ringförmigen Schlitzes (32) zwischen zwei benachbarten Gliedern der Hülsen (24, 25) ist hingegen an Enden der betreffenden ringförmigen Vorsprünge (28, 29) angeordnet,

Richtungen der Umdrehungen der benachbarten Hülsenelemente (24, 25) sind zueinander gegenüberliegend,

der besagte Kopf enthält zusätzlich

ein radial äußeres Verbindungselement (40), das am Gehäuse (21) befestigt ist und eine radial innere ringförmige Fläche (42) aufweist, die grundsätzlich zur radial äußeren ringförmigen Fläche (34) des ringförmigen Vorsprungs (28) am radial äußersten Hülsenelementes (25) passt,

ein radial inneres Verbindungselement (39), das am zylinderförmigen Element (22) befestigt ist und eine radial äußere ringförmige Fläche (41) aufweist, die grundsätzlich zur radial inneren ringförmigen Fläche (35) des ringförmigen Vorsprungs (29) des radial innersten Hülsenelementes (24) passt,

wobei die beiden Verbindungselemente (39, 40) einen Schlitz (46) bilden, der einen Enddurchmesser des extrudierten Gehäuses bestimmt, **dadurch gekennzeichnet, dass** die radiale Breite des ringförmigen Schlitzes (31, 32, 33) im Bereich von 340 bis 625 μm liegt und die Flächen, die die ringförmigen Schlitze (31, 32, 33) bestimmen, poliert werden.

2. Extruder zur Herstellung von zylinderförmigen Kollagenhüllen, die einen Extruderkopf, mindestens einen Motor und mindestens eine Pumpe zur Zuführung von Kollagengel-Gemisch zum Extruderkopf aufweist, **dadurch gekennzeichnet, dass** der Extruderkopf (2) eine im Anspruch 1 festgelegte Bauweise aufweist, in dem mindestens ein besagter Motor (11) die Hülsenelemente (24, 25) des Extruderkopfes (2) antreibt und mindestens eine besagte Pumpe (14a, 14b, 14c) das Kollagengel-Gemisch mindestens einem besagten ringförmigen Schlitz (31, 32, 33) zuführt.

3. Die zylinderförmige Kollagenhülle wird durch axiales Extrudieren des Kollagengel-Gemisches durch mindestens einen ringförmigen Schlitz des Extruderkopfes am Extruder hergestellt, wie dies im Anspruch 1 festgelegt ist,

an dem mindestens eine periphere den Schlitz bestimmende Fläche sich beim Extrudieren dreht, als Matrize aus im Füllstoff getauchten Biopolymerfasern vorliegt und mindestens zwei laminierte Schlitzschichten aus mindestens einem besagten ringförmigen Schlitz aufweist, **dadurch gekennzeichnet, dass** jede der mindestens zwei Schlitzschichten (100, 200, 300) mindestens zwei Unterschichten (301, 302; 201, 203; 101, 102) der spiralförmig um die Längsachse (L) der Hülle und grundsätzlich zueinander parallel angeordneten Fasern aufweist und die Orientierung der Fasern bei besagten mindestens zwei Unterschichten bei mindestens einer Schlitzschicht unterschiedlich sind, außerdem

ist die Anordnung der Fasern der inneren Unterschicht (101) innerhalb der inneren Schlitzschicht (100) winkelförmig zur Anordnung der Fasern der äußeren Unterschicht (102), wobei dieser Winkel im Bereich von 27,5 bis 45° liegt,

die Anordnung der Fasern der inneren Unterschicht (301) hingegen innerhalb der äußeren Schlitzschicht (300) winkelförmig zur Anordnung der Fasern der äußeren Unterschicht (302) ist, wobei dieser Winkel im Bereich von 27,5 bis 45° liegt,

die Anordnung der Fasern der inneren Unterschicht (101) in der inneren Schlitzschicht (100) wiederum winkelförmig zur Anordnung der Fasern der äußeren Unterschicht (302) in der äußeren Schicht (300) ist, wobei dieser Winkel im Bereich von 80° bis 100° liegt.

4. Die zylinderförmige Kollagenhülle nach Anspruch 3, **dadurch gekennzeichnet, dass** mindestens eine der besagten Schlichtschichten (200) eine zusätzliche Unterschicht (202) der Fasern mit einem grundsätzlich zufälligen Querschnitt aufweist, die sich zwischen den besagten zwei Unterschichten (201, 203) dieser Schlitzschicht (200) befinden und die beiden peripheren den Schlitz zum Auspressen für diese Schlitzschicht bestimmenden Flächen sich in entgegengesetzte Richtungen beim Extrudieren drehen.

5. Zylinderförmige Kollagenhülle nach Anspruch 3 bzw. 4, **dadurch gekennzeichnet, dass** die Anordnung der Fasern der äußeren Unterschicht (302) innerhalb der äußeren Schlitzschicht (300) winkelförmig zur L-Längsachse der Hülle ist, wobei dieser Winkel ($\alpha$302) im Bereich von 5 bis 12,5° liegt und die Anordnung der inneren Unterschicht (301) winkelförmig zur L-Längsachse der Hülle ist, wobei dieser Winkel ($\alpha$301) im Bereich von 40 bis 50° liegt,

die Anordnung der Fasern der inneren Unterschicht (101) innerhalb der inneren Schlitzschicht (100) hingegen winkelförmig zur L-Längsachse der Hülle ist, wobei dieser Winkel ($\alpha$101) im Bereich von 167,5 bis 175° liegt und die Anordnung der äußeren Unterschicht (102) winkelförmig zur L-Längsachse der Hülle ist, wobei dieser Winkel ($\alpha$102) im Bereich von 130 bis 140° liegt.

6. Die zylinderförmige Kollagenhülle nach Anspruch 3 und 4, **dadurch gekennzeichnet, dass** sie mindestens drei Schlitzschichten (100, 200, 300) enthält, in denen mindestens eine Zwischenschlitzschicht (200) eine zusätzliche Unterschicht (202) der Fasern mit der grundsätzlich zufälligen Anordnung enthält, die zwischen der inneren Unterschicht (201) der Fasern vorliegt, die zur L-Längsachse der Hülle im Winkel ($\alpha$201) im Bereich von 130 bis 140° angeordnet sind, sowie eine äußere Unterschicht (203) der Fasern enthält, die zur L-Längsachse der Hülle im Winkel ($\alpha$203) im Bereich von 40 bis 50° angeordnet sind.

7. Herstellungsverfahren zur Herstellung der zylinderförmigen Kollagenhülle umfassend folgende Etappen:

(a) Zuführung des Kollagengel-Gemisches zur axial inneren Seite des Gehäuseelementes des Extruderkopfes beim Extruder nach Anspruch 1,
(b) axiales Extrudieren von Kollagengel-Gemisch durch mindestens einen ringförmigen Schlitz, der die axial innere Seite mit der axial äußeren Seite des besagten Gehäuseelementes verbindet, an dem mindestens eine periphere den Schlitz bestimmende Fläche sich beim Extrudieren dreht, indem sie mindestens eine Schlitzschicht bildet, **dadurch gekennzeichnet, dass** es ferner die Etappe (c), d.h. Trocknung mindestens einer besagten Schlitzschicht (100, 200, 300) auf der axial äußeren Seite (27) des besagten Gehäuseelementes (21) zur Ausformung von mindestens zwei Unterschichten (301, 302; 201, 203; 101,102) der um die Längsachse (L) der Hülle spiralförmig angeordneten Fasern umfasst, die grundsätzlich zueinander parallel sind, wobei die Orientierung der Fasern bei den besagten mindestens zwei Unterschichten bei mindestens einer Schlitzschicht unterschiedlich sind.

8. Herstellungsverfahren zur Herstellung der zylinderförmigen Kollagenhülle nach Anspruch 7, **gekennzeichnet dadurch, dass** die besagte Etappe (b) das Extrudieren des Kollagengel-Gemisches durch mindestens zwei ringförmige Schlitze (31, 32, 33) umfasst und einer dieser Schlitze (32) sich zwischen zwei Hülsenelementen (24, 25) mit ringförmigen Vorsprüngen (28, 29) befindet, die in axiale Richtung verengen und sich nach außen auf der äußeren Seite (27) des Gehäuseelementes (21) erstrecken, die Austritte der besagten ringförmigen Schlitze sind hingegen zwischen jedem Paar der benachbarten Hülsenelemente an den Enden der entsprechenden ringförmigen Vorsprünge (28, 29) angeordnet.

**Revendications**

1. Une tête d'extrusion pour un appareil d'extrusion pour produire des enveloppes de collagène cylindriques ayant un côté axialement interne pour délivrer un mélange de gel de collagène pour l'extrusion et un côté axialement externe pour recevoir des couches extrudées de fibrilles de collagène comprenant :

- un élément de logement (21) muni d'une ouverture cylindrique,
- un élément cylindrique (22) disposé concentriquement à l'intérieur de l'ouverture cylindrique dudit élément de logement (21),
- deux manchons (24, 25) disposés concentriquement à l'intérieur d'un canal annulaire entre la surface circonférentielle de l'ouverture cylindrique dudit élément de logement (21) et la surface circonférentielle dudit élément cylindrique (22), qui peuvent tourner dans ce canal, la surface circonférentielle d'un manchon (24, 25) et la surface circonférentielle d'un élément (21, 25, 24, 22) voisin de cet élément (24, 25) définissent un espace annulaire (31, 32, 33) qui relie le côté axialement interne avec le côté axialement externe dudit élément de logement (21),

où,
lesdits éléments de manchon (24, 25) sont munis de saillies annulaires (28, 29) effilées dans une direction axiale (L) et la sortie d'un espace annulaire (32) entre les éléments de manchon voisins (24, 25) est située aux extrémités des saillies annulaires correspondantes (28, 29),
et dans lequel les directions des rotations des éléments de manchon voisins (24, 25) sont opposées l'une à l'autre,
dans lequel ladite tête comprend en outre
un adaptateur radialement externe (40) fixé à l'élément de logement (21) pourvu d'une surface annulaire radialement interne (42) qui correspond sensiblement à la surface annulaire radialement externe (34) de la saillie annulaire (28) de l'élément de manchon radialement le plus extérieur (25),
un adaptateur radialement interne (39) fixé à l'élément cylindrique (22) muni d'une surface annulaire radialement externe (41) qui correspond sensiblement à la surface annulaire radialement interne (35) de la saillie annulaire (29) de l'élément de manchon radialement le plus interne (24)
dans lequel les deux adaptateurs (39, 40) forment un espace (46) responsable du diamètre final de l'enveloppe extrudée
**caractérisé en ce que**
une largeur radiale de l'espace annulaire (31, 32, 33) est comprise entre 340 et 625 μm, et les surfaces définissant les espaces annulaires (31, 32, 33) sont polies.

2. L'appareil d'extrusion pour produire des enveloppes de collagène cylindriques, comprenant une tête d'extrusion, au moins un moteur et au moins une pompe pour délivrer un mélange de gel de collagène à la tête d'extrusion, **caractérisé en ce que** la tête d'extrusion (2) définie dans la revendication 1, dans laquelle ledit au moins un moteur (11) entraîne les manchons (24, 25) de la tête d'extrusion (2) et ladite au moins une pompe (14a, 14b, 14c) délivre un mélange de gel de collagène à ladite au moins une espace annulaire (31, 32, 33).

3. Une enveloppe de collagène cylindrique formée par extrusion axiale d'un mélange de gel de collagène à travers au moins un interstice annulaire d'une tête d'extrusion pour une extrudeuse comme définie dans la revendication 1, où au moins une surface circonférentielle définissant l'interstice tourne pendant le processus d'extrusion, ayant une forme d'une matrice de fibrilles de biopolymère submergées dans une charge, comprenant au moins deux couches laminées à l'interstice extrudé à partir dudit au moins un interstice annulaire, **caractérisé en ce que** chacun des au moins deux couches d'interstice (100, 200, 300) comprennent au moins deux sous-couches (301, 302; 201, 203; 101, 102) de fibrilles alignées en hélice autour de l'axe longitudinal (L) de l'enveloppe et sensiblement parallèles les unes aux autres, et les directions des alignements de fibrilles desdites au moins deux sous-couches de ladite au moins une couche d'interstice sont différentes et dans les fibrilles de la couche d'interstice interne (100), l'alignement de la sous-couche interne (101) est incliné par rapport à l'alignement des fibrilles de la sous-couche externe (102) selon un angle compris entre 27,5 et 45 °, et dans les fibrilles de la couche d'interstice externe (300), l'alignement de la sous-couche interne (301) est incliné par rapport à l'alignement des fibrilles de la sous-couche externe (302) selon un angle compris entre 27,5 et 45 °, alors que l'alignement des fibrilles de la sous-couche interne (101) de la couche d'interstice interne (100) est incliné par rapport à l'alignement des fibrilles de la sous-couche externe (302) de la couche externe (300) selon un angle compris entre 80 ° et 100 °.

4. L'enveloppe de collagène cylindrique selon la revendication 3, **caractérisée en ce que** au moins une desdites couches d'intervalle (200) comprend une sous-couche supplémentaire (202) de fibrilles d'alignement croisé sensiblement aléatoire, située entre lesdites deux sous-couches (201, 203) de cette couche (200) et les deux surfaces circonférentielles définissant l'espace d'extrusion pour cette couche d'intervalle tourne dans les directions opposées pendant le processus d'extrusion.

5. L'enveloppe de collagène cylindrique selon la revendication 3 ou 4, **caractérisée en ce que** dans la couche d'interstice externe (300), l'alignement des fibrilles de la sous-couche externe (302) est incliné par rapport à l'axe longitudinal L du boîtier (α302) dans une plage de 5 à 12,5 ° et fibrilles, l'alignement de la sous-couche interne (301) est incliné par rapport à l'axe longitudinal L de l'enveloppe selon un angle (α301) compris entre 40 et 50 °, tandis que dans les fibrilles de la couche interne (100), l'alignement de la sous-couche interne (101) est incliné par rapport à l'axe longitudinal L de l'enveloppe selon un angle (α101) compris entre 167,5 et 175 ° et l'alignement des fibrilles de la sous-couche externe (102) est incliné par rapport à l'axe longitudinal L du boîtier selon un angle (α102) compris entre 130 et 140 °.

6. L'enveloppe de collagène cylindrique selon la revendication 3 ou 4, **caractérisée en ce qu'**elle comprend au moins trois interstices (100, 200, 300) dans lesquelles au moins une couche d'intervalle intermédiaire (200) x comporte une sous-couche supplémentaire (202) de fibrilles de alignement essentiellement aléatoire pris en sandwich entre une sous-couche interne (201) de fibrilles alignées par rapport à l'axe longitudinal L de l'enveloppe selon un angle (α201) compris entre 130 et 140° et une sous-couche externe (203) de fibrilles alignées par rapport à l'axe longitudinal L de l'enveloppe selon un angle (α203) de 40 à 50°.

7. La procédé de production d'une enveloppe de collagène cylindrique comprenant les étapes consistant à

(a) délivrer un mélange de gel de collagène à un côté axialement interne d'un élément de logement d'une tête d'extrusion pour un appareil extrudeur tel que défini dans la revendication 1,
(b) extruder du gel de collagène mélange axialement à travers au moins un interstice annulaire reliant le côté axialement interne à un côté axialement externe dudit élément de logement, où au moins une surface circonférentielle définissant l'interstice tourne pendant le processus d'extrusion, pour former au moins une couche d'interstice, **caractérisée en ce qu'**elle comprend en outre l'étape (c) de séchage de ladite au moins un interstice (100, 200, 300) sur le côté axialement externe (27) dudit élément de logement (21) pour former au moins deux sous-couches (301, 302; 201, 203; 101,102) de fibrilles alignées en hélice autour de l'axe longitudinal (L) du boîtier et sensiblement parallèles les unes aux autres, dans lequel les directions de pas des alignements de fibrilles desdites au moins deux sous-couches de ladite au moins une couche d'espacement est différente.

8. Le procédé de fabrication d'une enveloppe de collagène cylindrique selon la revendication 7, **caractérisé en ce que** ladite étape (b) consiste à extruder le mélange de gel de collagène à travers au moins deux espaces annulaires (31, 32, 33) et l'un de ces espaces est situé entre deux manchons (24, 25) munis de saillies annulaires (28, 29) effilées dans une direction axiale et s'étendant à l'extérieur du côté externe (27) de l'élément de boîtier (21) et des sorties desdits espaces annulaires entre chaque paire des manchons voisins sont situés aux extrémités des saillies annulaires correspondantes (28, 29).

Fig. 1

Fig. 2

Fig. 3

Fig. 4a

Fig. 4b

Fig. 4c

Fig. 5

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080217820 A
- WO 9821973 A
- CN 200962804
- WO 9015706 A
- US 4420451 A
- WO 92112840 A
- SU 542457
- US 4138503 A
- PL 287902
- GB 988875 A